# EUROPEAN PATENT APPLICATION

(11) **EP 4 437 917 A1**
(43) Date of publication of application: **02.10.2024**
(21) Application number: 24164668.6
(22) Date of filing: 19.03.2024
(51) Int. Cl.: A47J 37/06

(54) **FRYING BASKET WITH DETACHABLE VIEWING WINDOW AND AIR FRYER**

(30) Priority: 27.03.2023 CN 202320653448 U; 27.03.2023 CN 202320653502 U
(71) Applicant: Ningbo Careline Electric Appliance Co., Ltd., Ningbo, Zhejiang 315000 (CN)
(72) Inventor: ZHANG, Yichi, NINGBO, 315000 (CN); PAN, Huayuan, NINGBO, 315000 (CN); HUO, Zhian, NINGBO, 315000 (CN); SHEN, Jiaming, NINGBO, 315000 (CN)
(74) Representative: Locas, Davide

(57) **Abstract**

Disclosed is a frying basket with a detachable viewing window. The frying basket comprises a frying basket main body, a door panel assembly, a viewing window, and a viewing window panel, wherein the frying basket main body is provided with an accommodating cavity, and a side part of the frying basket main body is provided with a viewing port communicating with the accommodating cavity. A door panel assembly is provided on an outer side of the frying basket main body and fixedly connected to the frying basket main body, wherein the door panel assembly is provided with a viewing window port corresponding to the viewing port. A transparent board is provided between the door panel assembly and the frying basket main body to seal the viewing port. A viewing window panel is detachably arranged on the door panel assembly to seal the viewing window port. Further disclosed is an air fryer, comprising an air fryer main body and the aforementioned frying basket with a detachable viewing window arranged on the air fryer main body. In the present disclosure, the frying basket allows the viewing window panel to be detachably arranged on the door panel assembly, enabling users to remove the viewing window panel to clean the space in the viewing window panel and/or the space between the viewing window panel and the transparent board. This effectively enhances the user experience.

## Description

### Technical Field

The present disclosure relates to the technical field of kitchen appliances and cooking appliances, specifically to an air fryer, and in particular to a frying basket with a detachable viewing window and an air fryer.

### Background Art

With the improvement of the living standards of people, air fryer products are becoming increasingly popular. Most existing air fryers are equipped with frying basket structures. In order to facilitate the viewing of the cooking status of food inside the frying basket, some frying baskets are provided with a visual window on the door panel mechanism. The visual window generally includes heat-resistant glass on the inside and a transparent plastic panel on the outside. However, after using these air fryers for a period of time, oil stains easily enter the space between the glass and the transparent plastic panel and adhere to the inner surface of the visual area. This reduces the visibility of the visual window. Moreover, since most of the visual windows of the frying baskets are non-removable, it is difficult to clean them, significantly affecting the user experience. Therefore, there is a need for improvement in the existing structure.

### Summary

In the first aspect, a frying basket with a detachable viewing window is provided, comprising a frying basket main body, wherein the frying basket main body is provided with an accommodating cavity, and a side part of the frying basket main body is provided with a viewing port communicating with the accommodating cavity; a door panel assembly, provided on an outer side of the frying basket main body and fixedly connected to the frying basket main body, wherein the door panel assembly is provided with a viewing window port corresponding to the viewing port; a transparent board, provided between the door panel assembly and the frying basket main body to seal the viewing port; and a viewing window panel, detachably arranged on the door panel assembly to seal the viewing window port.

In the second aspect, a frying basket with a detachable viewing window is provided, comprising a frying basket main body, wherein the frying basket main body is provided with an accommodating cavity, and a side part of the frying basket main body is provided with a viewing port communicating with the accommodating cavity; a door mechanism, provided on an outer side of the frying basket main body and fixedly connected to the frying basket main body, wherein the door mechanism is provided with a viewing window port corresponding to the viewing port; an inner transparent board, provided between the door mechanism and the frying basket main body to seal the viewing port; an outer transparent board, slidably arranged on the door mechanism, wherein the outer transparent board has a first position where the viewing window port is completely sealed, and the outer transparent board is provided with a limit hole; and a button, arranged on the door mechanism, wherein the button has a pop-up state and a pressed state, and the button matches with the limit hole, wherein when the outer transparent board is in the first position and the button is in the pop-up state, the button is snapped with the limit hole, and the outer transparent board is locked in the first position; when the button switches to the pressed state, the button separates from the limit hole, and the outer transparent board is released from its locked position.

In the third aspect, an air fryer is provided, comprising an air fryer main body and a frying basket as described in the first aspect above or a frying basket as described in the second aspect above provided on the air fryer main body.

### Brief Description of Drawings

In order to more clearly illustrate the specific embodiments of the present disclosure or the technical solution in the prior art, the drawings required to be used in the description of the specific embodiment or prior art will be briefly introduced as follows. Obviously, the drawings described below are some embodiments of the present disclosure, for those of ordinary skill in the art, without paying inventive labor, may also obtain other drawings according to these drawings.
FIG. 1 is an exploded view of an air fryer of a first embodiment of the present disclosure;
FIG. 2 is an exploded view of a frying basket of the first embodiment of the present disclosure;
FIG. 3 is a schematic view of a removal process of the viewing window panel of a frying basket of the first embodiment of the present disclosure;
FIG. 4 is a partially enlarged view of a disassembled state of a frying basket of the first embodiment of the present disclosure;
FIG. 5 is a partially enlarged view of a frying basket in a sectional state of the first embodiment of the present disclosure;
FIG. 6 is a partially enlarged view of a frying basket in a sectional state of the first embodiment of the present disclosure;
FIG. 7 is a partial sectional view of an air fryer of the first embodiment of the present disclosure;
FIG. 8 is a schematic view of the structure of a frying basket of a second embodiment of the present disclosure;
FIG. 9 is an exploded view of a frying basket of the second embodiment of the present disclosure;
FIG. 10 is a schematic view of a removal of the viewing window panel of a frying basket of the second embodiment of the present disclosure;
FIG. 11 is a partial sectional view of a frying basket of a second embodiment of the present disclosure;
FIG. 12 is an exploded view of an air fryer of a third embodiment of the present disclosure;
FIG. 13 is an exploded view of a frying basket of a third embodiment of the present disclosure;
FIG. 14 is a schematic view of a removal of an outer transparent board of a frying basket of the third embodiment of the present disclosure;
FIG. 15 is a schematic view of the structure of the outer transparent board of the frying basket of the third embodiment of the present disclosure;
FIG. 16 is a partial sectional view of a frying basket of the third embodiment of the present disclosure;
FIG. 17 is a partial sectional view of an air fryer of the third embodiment of the present disclosure;
FIG. 18 is an exploded view of a frying basket of a fourth embodiment of the present disclosure; and
FIG. 19 is a schematic diagram of a removal of an outer transparent board of a frying basket of the fourth embodiment of the present disclosure.

Reference numerals: 10 (10A) - frying basket; 11 (11A) - frying basket main body; 111 (111A) - accommodating cavity; 112 (112A) - viewing port; 12 (12A) - door panel assembly; 121 (121A) - viewing window port; 122 - slide track; 123 - guide groove; 124 - limit slot; 125 - positioning part; 126A - snap groove; 127A - groove; 13 (13A) - transparent board; 14 (14A) - viewing window panel; 141 - guide block; 142 - handle part; 143 - limit block; 144 - positioning slot; 145 - transmission part; 15 - snap-in structure; 151 - snap-in part; 152 - snap-in groove; 16A - snapping structure; 161A - fastener; 162A - slot; 20 - air fryer main body; 21 - cooking chamber; 22 - frying basket opening; 30 -microswitch component; 100 (100A) - frying basket; 110 (110A) - frying basket main body; 1110 (1110A) - accommodating cavity; 1120 (1120A) - viewing port; 120 (120A) - door mechanism; 1210 (1210A) - viewing window port; 1220 - mounting groove; 1230 - sliding slot; 1240 - positioning slot; 1250 - limit slot; 1260A - protective piece; 130 (130A) - inner transparent board; 140 (140A) - sealing ring; 150 (150A) - outer transparent board; 1510 (1510A) - limit hole; 1520 - slide block; 1530 - positioning block; 1540 - transmission part; 160 (160A) - button; 170 - snap-in limit structure; 1710 - snap-in groove; 1720 - limit block; 180 - elastic component; 190 - handle; 200 - air fryer main body; 210 - cooking chamber; 220 - frying basket mounting port; 230 - microswitch component.

### Detailed Description of Embodiments

The present disclosure provides a frying basket with a detachable viewing window and an air fryer to address the technical issues of difficult cleaning of existing air fryer viewing windows and poor user experience.

In order to solve the above technical problems, the present disclosure provides a frying basket with a detachable viewing window. The frying basket comprises a frying basket main body, a door panel assembly, a viewing window, and a viewing window panel, wherein the frying basket main body is provided with an accommodating cavity, and a side part of the frying basket main body is provided with a viewing port communicating with the accommodating cavity. A door panel assembly is provided on an outer side of the frying basket main body and fixedly connected to the frying basket main body, wherein the door panel assembly is provided with a viewing window port corresponding to the viewing port. A transparent board is provided between the door panel assembly and the frying basket main body to seal the viewing port. A viewing window panel is detachably arranged on the door panel assembly to seal the viewing window port. The frying basket allows the viewing window panel to be detachably arranged on the door panel assembly, enabling users to remove the viewing window panel to clean the space in the viewing window panel and/or the space between the viewing window panel and the transparent board. This effectively enhances the user experience.

In one optional embodiment, the door panel assembly is provided with a slide track, and both sides of the slide track are provided with guide grooves; both sides of the viewing window panel are provided with guide blocks matching the guide grooves, and the viewing window panel is suitable to be slidably arranged in the slide track via the guide blocks; snap-in structures matched with each other are provided on the viewing window panel and the door panel assembly, and the snap-in structure has a locked state and unlocked state; when the viewing window panel is completely positioned within the slide track, the snap-in structure is in the locked state and the viewing window panel is locked in the slide track by the snap-in structure; when the locking structure is in the unlocked state, the viewing window panel is unlocked. In the embodiment, the guide groove and slide track are suitable to provide limiting and/or guiding functions. When users mount or remove the viewing window panel, only the viewing window panel needs to be slid, which enables the viewing window panel to slide along the guide groove within the slide track. The removal and mounting of the viewing window panel can be realized, thus reducing the difficulty of mounting and removal of the viewing window panel.

In one optional embodiment, the snap-in structure comprises a snap-in groove and a snap-in part, wherein the snap-in groove or the locking part is symmetrically arranged on both sides and/or at a bottom of the viewing window port of the door panel assembly. The viewing window panel is arranged with the snap-in groove or snap-in part that matches the door panel assembly, wherein when the snap-in part is snapped onto the snap-in groove, the snap-in structure is in the locked state. In the embodiment, the symmetrical arrangement of the snap-in structures on both the door panel assembly and the viewing window panel ensures that the viewing window panel is not misaligned during mounting, thus reducing the difficulty of mounting the viewing window panel.

In one optional embodiment, the viewing window panel is provided with a handle part; the viewing window panel is made of an elastic transparent material; when the viewing window panel is fully positioned in the slide track, it is suitable to apply external force to the viewing window panel through the handle part so as to switch the snap-in structure from the locked state to the unlocked state. In the embodiment, the handle part is suitable to provide a focus point for users, allowing the users to apply external force more effectively to the viewing window panel.

In one optional embodiment, the handle part is arranged adjacent to the snap-in structure, allowing users to apply external force to the viewing window panel through the handle part. This reduces the force required to switch the snap-in structure from the locked state to the unlocked state, making it not only easier to operate but also significantly improving the user experience.

In one optional embodiment, both sides of a lower part of the viewing window panel are provided with the guide blocks, wherein the guide blocks are slidably arranged within the guide grooves, and the viewing window panel is suitable to slide within the slide track via the guide blocks. In the embodiment, the guide blocks are only mounted on both sides of the lower part of the viewing window panel. This not only saves material costs but also reduces the sliding distance of the viewing window panel, thus simplifying the assembly and disassembly process.

In one optional embodiment, the viewing window panel is suitable to enter the slide track from a bottom side of the slide track; a limit slot is provided on an upper side of the slide track; an upper part of the viewing window panel is provided with a limit block, and when the viewing window panel fully enters into the slide track, the limit block is snapped onto the limit slot. In the embodiment, the limit slot is suitable to position and/or limit the viewing window panel, thus reducing the difficulty of mounting and enhancing the stability of the connection between the viewing window panel and the door panel assembly.

In one optional embodiment, the viewing window panel and the door panel assembly are provided with multiple snapping structures matching with each other, and the viewing window panel is suitable to directly snap onto the door panel assembly through the snapping structures. In the embodiment, the viewing window panel is directly snapped onto the door panel assembly via the snapping structures. This not only simplifies the assembly and disassembly process of the viewing window panel but also effectively reduces the difficulty of mounting and removal of the viewing window panel.

The present disclosure also provides an air fryer comprising an air fryer main body, wherein the air fryer main body is provided therein with a cooking chamber, and the aforementioned frying basket with a detachable viewing window is detachably arranged within the cooking chamber.

The present disclosure provides a frying basket with a detachable viewing window and an air fryer to address the technical issues of non-removable or difficult-to-remove viewing windows in existing air fryers, leading to difficulties in cleaning the viewing window interlayer and resulting in a poor user experience.

In order to solve the above technical problems, the present disclosure provides a frying basket with a detachable viewing window, wherein the frying basket with a detachable viewing window comprises a frying basket main body, a door mechanism, an inner transparent board, an outer transparent board, and a button. The frying basket main body is provided with an accommodating cavity, and a side part of the frying basket main body is provided with a viewing port communicating with the accommodating cavity. The door mechanism is provided on an outer side of the frying basket main body and fixedly connected to the frying basket main body, wherein the door mechanism is provided thereon with a viewing window port corresponding to the viewing port. The inner transparent board is provided between the door mechanism and the frying basket main body to seal the viewing port. The outer transparent board is slidably arranged on the door mechanism, wherein the outer transparent board has a first position where the viewing window port is completely sealed, and the outer transparent board is provided with a limit hole. The button is arranged on the door mechanism, wherein the button has a pop-up state and a pressed state, and the button matches the limit hole. When the outer transparent board is in the first position and the button is in the pop-up state, the button is snapped with the limit hole, and the outer transparent board is locked in the first position. When the button switches to the pressed state, the button separates from the limit hole, and the outer transparent board is released from its locked position. The frying basket allows the outer transparent board to be slidably arranged on the door mechanism and to be locked by the button. Therefore, when cleaning the frying basket, users only need to separate the button from the limit hole to unlock it so that the external transparent board is allowed to be removed to clean the space between the outer transparent board and the inner transparent board. This makes the disassembly and cleaning of the outer transparent board relatively simple and convenient, thereby effectively enhancing the user experience.

In one optional embodiment, the door mechanism is provided with a mounting groove corresponding to the viewing window port; the outer transparent board is slidably arranged in the mounting groove, and the outer transparent board is suitable to slide along the mounting groove in a vertical direction. In the embodiment, the mounting groove is suitable for limiting and/or guiding. The mounting groove is suitable to limit the lateral position of the outer transparent board, thus ensuring that the outer transparent board can only slide along the mounting groove. This reduces the difficulty of mounting and removing the outer transparent board.

In one optional embodiment, both sides of the mounting groove are arranged with sliding slots; both sides of a lower part of the outer transparent board are provided with slide blocks, wherein the slide blocks are slidably arranged within the sliding slots; and the outer transparent board is suitable to slide within the mounting groove via the slide block. In the embodiment, the sliding slot is suitable for the limitation. The sliding slot is suitable to limit the forward and backward orientation of the outer transparent board. Thereby, the outer transparent board is slidably retained in the mounting groove. Additionally, by only arranging the slide blocks on both sides of the lower part of the outer transparent board, the sliding distance of the outer transparent board is shortened, thus simplifying the assembly and disassembly process.

In one optional embodiment, an upper side of the mounting groove is provided with a positioning slot; the upper part of the outer transparent board is provided with a positioning block; and when the outer transparent board is locked in the first position, the positioning block is suitable to be snapped with the positioning slot. In the embodiment, the positioning slot is suitable for positioning and/or limiting and is suitable for enhancing the stability of the connection between the outer transparent board and the door mechanism by the positioning slot.

In one optional embodiment, when the outer transparent board is locked in the first position, the outer surfaces of the door mechanism, the outer transparent board, and the button are flush with each other. This enhances the overall aesthetics of the frying basket.

In one optional embodiment, the lower part of the outer transparent board and the lower part of the door mechanism are provided with snap-in limit structures; when the outer transparent board is locked in the first position, the snap-in limit structures are suitable to limit the outer transparent board. Thus, this further reduces the difficulty of mounting and removing the outer transparent board.

In one optional embodiment, the button is made of elastic material, and one end of the button is connected to the door mechanism; the door mechanism is provided thereon with a protective piece corresponding to the button; and when the button is in the pressed state, the button abuts against the protective piece. In the embodiment, the button is made of elastic material. This allows the button to automatically snap with the limit hole during the mounting of the outer transparent board, thus enhancing the convenience of use. Additionally, the protective piece prevents the button from breaking due to excessive pressing, thereby improving structural reliability.

In one optional embodiment, the door mechanism is provided with a limit slot matching the button; the limit slot is provided therein with an elastic component corresponding to the button; when the elastic component is in a natural state, the button is in the pop-up state. The elastic component allows the button to remain in the pop-up state, which in turn allows the button to be continuously locked to the outer transparent board, thereby improving structural reliability.

The present disclosure also provides an air fryer comprising an air fryer main body and a frying basket with a detachable viewing window as described in any of the embodiments mentioned above, arranged on the air fryer main body.

In one optional embodiment, the air fryer main body is provided with a cooking chamber; a side part of the air fryer main body is provided with a frying basket mounting port communicating with the cooking chamber; the frying basket is suitable to be detachably arranged inside the cooking chamber through the frying basket mounting port; the frying basket mounting port is provided with a microswitch component, wherein the microswitch component is suitable to be electrically connected to a control circuit of the air fryer; and when the frying basket is mounted in the cooking chamber, the outer transparent board matches with the microswitch component in a transmission manner. In the embodiment, when mounted on the air fryer main body, the frying basket is suitable to be in a transmission connection with the microswitch component through the outer transparent board to prevent accidental operation, thereby effectively enhancing the use safety of the air fryer.

The beneficial effects of the present disclosure compared to the prior art are as follows.

In the present disclosure, the viewing window panel is detachably arranged on the door panel assembly, thus enabling users to remove the viewing window panel to clean the space in the viewing window panel and/or between the viewing window panel and the transparent board. This effectively enhances the user experience. Additionally, the door panel assembly is provided with a slide track, and both sides of the slide track are provided with the guide grooves. Both sides of the viewing window panel are provided with the guide blocks matching the guide grooves. When users mount or remove the viewing window panel, only the viewing window panel needs to be slid, which enables the guide blocks to slide along the guide groove within the slide track. Therefore, the removal and mounting of the viewing window panel can be realized, thus reducing the difficulty of mounting and removal of the viewing window panel. At the same time, the viewing window panel and the door panel assembly can be provided with multiple snapping structures matching with each other, and the viewing window panel is directly snapped onto the door panel assembly through the snapping structures. This simplifies the assembly and disassembly process of the viewing window panel and effectively reduces the difficulty of mounting the viewing window panel.

In the present disclosure, a limit hole is arranged on the outer transparent board, and the button matching the limit hole is arranged on the door mechanism. When the outer transparent board is slidably arranged on the door mechanism, the outer transparent board is locked onto the door mechanism by snapping the button with the limit hole. During the disassembly of the outer transparent board, unlocking is achieved by separating the button from the limit hole. This makes the mounting and removal of the outer transparent board relatively simple and convenient, effectively enhancing the user experience. Additionally, a mounting groove is arranged on the door mechanism, and both sides of the mounting groove are provided with the sliding slots. Using the sliding slots and the mounting groove to guide and/or limit the outer transparent board effectively reduces the difficulty of mounting and removing the outer transparent board. In addition, the frying basket mounting port is arranged with a microswitch component. When the frying basket is mounted on the air fryer main body, the outer transparent board is in transmission connection to the microswitch component to prevent accidental operation, thereby effectively enhancing the use safety of the air fryer.

In order to provide a clearer and more complete understanding of the objective, technical solutions, and advantages of the embodiment of the present disclosure, the following description will be combined with the accompanying drawings. It is evident that the described embodiments are a part of the embodiments of the present disclosure, rather than all embodiments. The components of the embodiments of the present disclosure generally described and illustrated in the drawings herein can be arranged and designed in a variety of different configurations.

Accordingly, the following detailed description of the embodiments of the present disclosure provided in the drawings is not intended to limit the scope of the present disclosure for which protection is claimed but merely represents selected embodiments of the present disclosure. Based on the embodiments of the present disclosure, all other embodiments obtained by those skilled in the art without inventive effort shall fall within the scope of protection of the present disclosure.

### First Embodiment

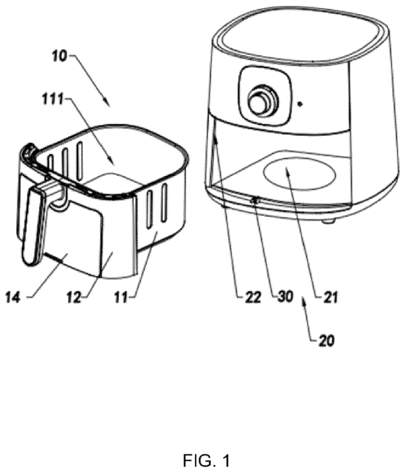

As shown in FIGS. 1 to 7 of the drawings, there are schematic diagrams of one frying basket with a detachable viewing window and an air fryer provided by the present disclosure. The air fryer comprises a frying basket 10 and an air fryer main body 20. The air fryer main body 20 is provided therein with a cooking chamber 21; a side part of the air fryer main body is provided with a frying basket opening 22 communicating with the cooking chamber 21; and the frying basket 10 is suitable to be detachably arranged inside the cooking chamber 21 through the frying basket opening 22.

The frying basket 10 comprises a frying basket main body 11 and a door panel assembly 12. The door panel assembly 12 is provided on an outer side of the frying basket main body 11 and fixedly connected to the frying basket main body 11.

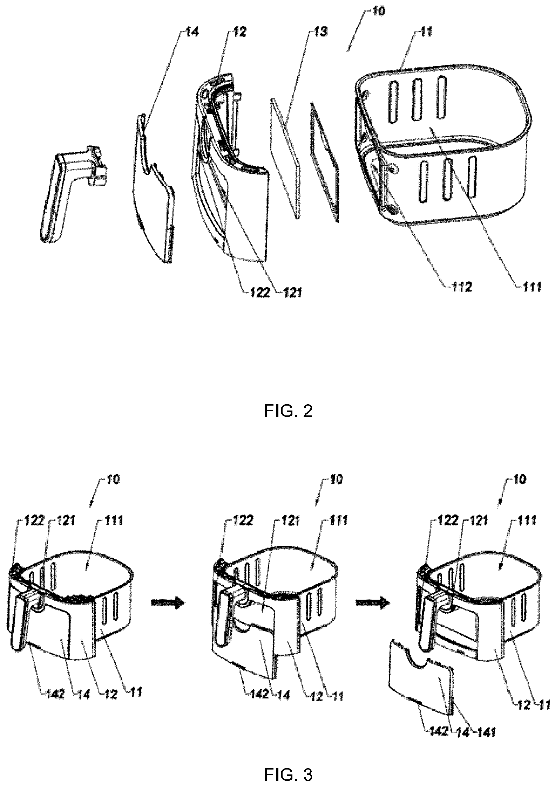

As shown in FIGS. 2 and 3, the frying basket main body 11 is provided with an accommodating cavity 111, wherein the accommodating cavity 111 is suitable to accommodate food. The side part of the frying basket main body 11 is provided with a viewing port 112, wherein the viewing port 112 communicates with the accommodating cavity 111. The door panel assembly 12 is suitable to be arranged at the viewing port 112 of the frying basket main body 11. The door panel assembly 12 is provided with a viewing window port 121 corresponding to the viewing port 112. This allows users to observe the cooking status of the food inside the accommodating cavity 111 through the viewing port 112 and the viewing window port 121 when cooking food.

As shown in FIG. 2, the frying basket 10 comprises a transparent board 13, and the transparent board 13 is arranged between the frying basket main body 11 and the door panel assembly 12 to seal the viewing port 112. The transparent board 13 is preferably made of heat-resistant transparent materials, such as heat-resistant transparent glass or heat-resistant transparent plastic. The material characteristics of the transparent board 13 ensure that when the transparent board 13 seals the viewing port 112, it does not affect the visibility of the viewing port 112.

As shown in the figure, a sealing ring is further arranged between the transparent board 13 and the frying basket main body 11. The sealing ring is suitable to be compressed and fixed around the periphery of the viewing port 112 of the frying basket main body 11 by the transparent board 13 and is suitable for a sealed connection between the transparent board 13 and the frying basket main body 11 through the sealing ring.

As shown in FIGS. 1 to 6, the frying basket 10 also includes a viewing window panel 14. The viewing window panel 14 is suitable to be detachably arranged on the door panel assembly 12 to seal the viewing window port 121. The viewing window panel 14 is detachably arranged on the door panel assembly 12, which enables the users to first remove the viewing window panel 14 when cleaning the frying basket 10, and then clean the space of the viewing window panel 14 and/or the space between the viewing window panel 14 and the transparent board 13. This effectively improves the ease of cleaning the frying basket 10. At the same time, the visibility of both the viewing window panel 14 and the transparent board 13 will also be enhanced after cleaning. Users can have a better view through the viewing window port 121 and the viewing port 112 when inspecting the cooking status of the food inside the accommodating cavity 11, thereby effectively improving the user experience.

As shown in FIGS. 3, 4, and 6, the door panel assembly 12 is provided with a slide track 122 corresponding to the viewing window port 121. The viewing window panel 14 is suitable to be slidably arranged within the slide track 122 to seal the viewing window port 121. When the viewing window panel 14 is slidably arranged within the slide track 122, the viewing window panel 14 aligns flush with the outer surface of the door panel assembly 12. The slide track 122 ensures that the mounting of the viewing window panel 14 onto the door panel assembly 12 does not compromise the overall aesthetic appearance of the door panel assembly 12. At the same time, the smooth and uniform appearance enhances the visual perception and appeal for users.

As shown in FIGS. 3, 4, and 6, both sides of the lower part of the viewing window panel 14 are provided with guide blocks 141. Both sides of the slide track 122 are provided with guide grooves 123 matching the guiding blocks 141. The guiding blocks 141 are suitable to slide smoothly within the guiding grooves 123. The viewing window panel 14 is suitable to slide along the slide track 122 within the guiding grooves 123 through the guide blocks 141. The guide blocks 141 are only mounted on both sides of the lower part of the viewing window panel 14. This not only saves material costs but also reduces the sliding distance of the viewing window panel, thus simplifying the assembly and disassembly process. At the same time, the guide groove 123 and slide track 122 are suitable to provide limiting and/or guiding functions. When users mount or remove the viewing window panel 14, only the viewing window panel 14 needs to be slid, which enables the viewing window panel 14 to slide along the guide groove 123 within the slide track 122. The removal and mounting of the viewing window panel 14 can be realized, thus reducing the difficulty of mounting and removal of the viewing window panel 14.

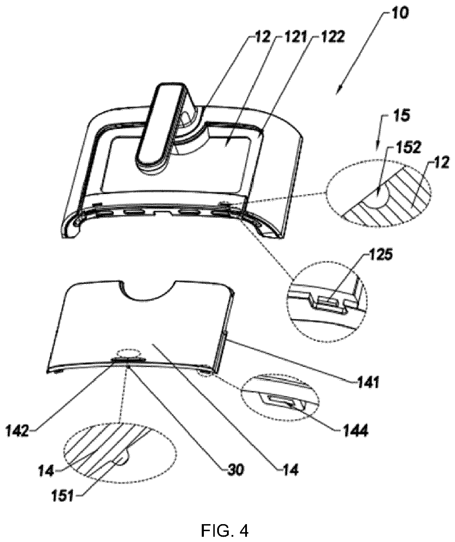

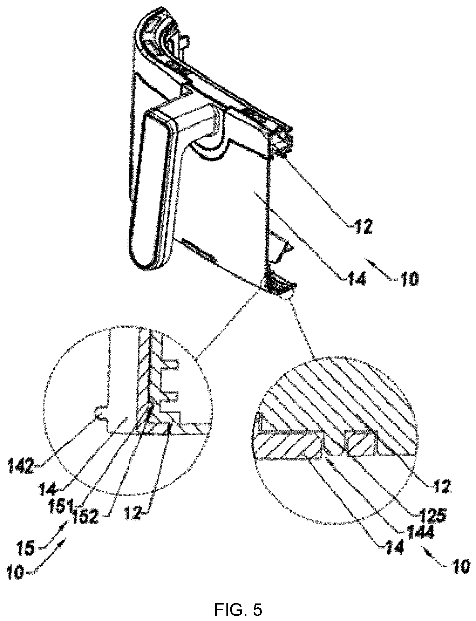

As shown in FIGS. 4 and 5, snap-in structures 15 matched with each other are provided on the viewing window panel 14 and the door panel assembly 12, and the snap-in structures 15 have a locked state and unlocked state. When the viewing window panel 14 is completely positioned within the slide track 122, the snap-in structures 15 are in the locked state and the viewing window panel 14 is locked in the slide track 122 by the snap-in structures 15. When the snap-in structures 15 are in the unlocked state, the viewing window panel 14 is unlocked and the viewing window panel 14 is suitable to slide out from the slide track 122.

As shown in FIGS. 4 and 5, the snap-in structure 15 comprises a snap-in groove 152 and a snap-in part 151, wherein the snap-in groove 152 or the locking part 151 is symmetrically arranged on both sides and/or a bottom of the viewing window port 121 of the door panel assembly 12. The viewing window panel 14 is provided with a snap-in groove 152 or snap-in part 151 matching the door panel assembly 12. When the viewing window panel 14 is mounted on the door panel assembly 12 or when the viewing window panel 14 is fully positioned within the slide track 122, the snap-in groove 152 is snapped with the snap-in part 151, and the snap-in structure 15 is in the locked state. When the snap-in groove 152 is separated from the snap-in part 151, the snap-in structure 15 is in the unlocked state. The symmetrical arrangement of the snap-in structures 15 on both the door panel assembly 12 and the viewing window panel 14 ensures that the viewing window panel 14 is not misaligned during mounting, thus reducing the difficulty of mounting the viewing window panel 14.

As shown in FIG. 3, the viewing window panel 14 is preferably made of elastic transparent material, such as elastic transparent plastic. The viewing window panel 14 is provided with a handle part 142. Preferably, the handle part 142 is arranged on the outer surface of the viewing window panel 14 and protrudes from the surface of the viewing window panel 14. When the viewing window panel 14 is mounted on the door panel assembly 12, the viewing window panel 14 is fully positioned within the slide track 122, and the snap-in structure 15 is in the locked state. When disassembling the viewing window panel 14, it is suitable that external force can be applied to the viewing window panel 14 via the handle part 142, which enables the snap-in structure 15 to transition from the locked state to the unlocked state, thereby removing the viewing window panel 14 from the door panel assembly 12. The handle part 142 is suitable to provide a focus point for users, allowing the users to apply external force more effectively to the viewing window panel 14.

As shown in FIG. 5, the handle part 142 is preferably arranged adjacent to the snap-in structure 15. The handle part 142 is arranged adjacent to the snap-in structure 15, allowing users to apply external force to the viewing window panel 14 through the handle part 142. This reduces the force required to switch the snap-in structure 15 from the locked state to the unlocked state, making it not only easier to operate but also significantly improving the user experience.

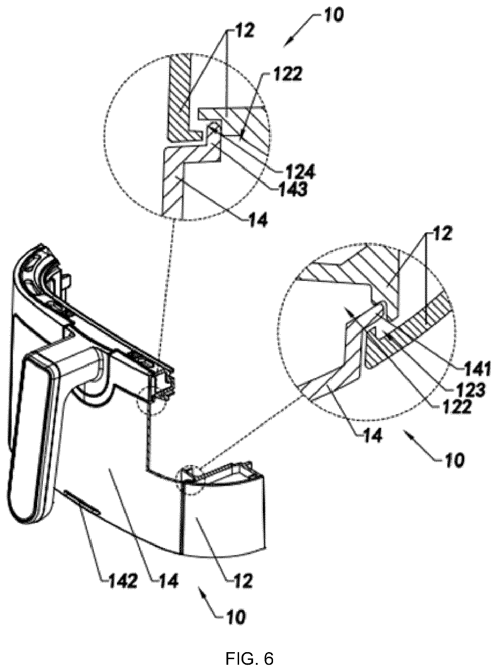

As shown in FIG. 6, during the mounting of the viewing window panel 14, the viewing window panel 14 is suitable to enter the slide track 122 from a bottom side of the slide track 122; and a limit slot 124 is provided on an upper side of the slide track 122; an upper part of the viewing window panel 14 is provided with a limit block 143, and when the viewing window panel 14 fully enters into the slide track 122, the limit block 143 is snapped onto the limit slot 124. The limit slot 124 is suitable to position and/or limit the viewing window panel 14, thus reducing the difficulty of mounting the viewing window panel 14 and enhancing the stability of the connection between the viewing window panel 14 and the door panel assembly 12.

As shown in FIGS. 4 and 5, the lower end of the door panel assembly 12 is provided with a positioning part 125, and the lower end of the viewing window panel 14 is provided with a positioning slot 144 matching the positioning part 125. When the viewing window panel 14 fully enters into the slide track 122, the positioning part 125 is snapped with the positioning groove 144. The positioning part 125 and the positioning slot 144 are suitable for the limitation, thus preventing any forward or backward deviation of the viewing window panel 14 after mounting.

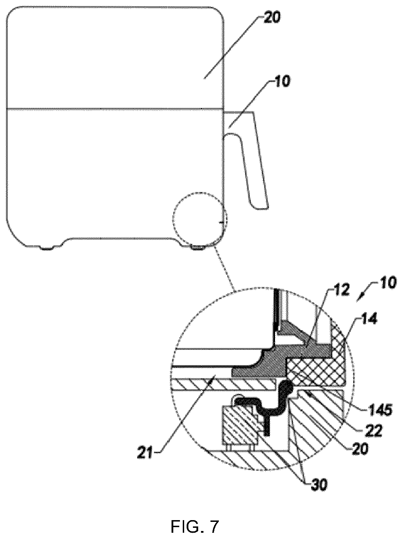

As shown in FIG. 7, the air fryer also includes a microswitch component 30, wherein the microswitch component 30 is arranged at the frying basket opening 22 of the air fryer main body 20 and protrudes at least partially from the inner wall of the frying basket opening 22. The microswitch component 30 is suitable to be electrically connected to the control circuit of the air fryer.

As shown in FIG. 7, a lower part of the viewing window panel 14, facing one side of the door panel assembly 12, is provided with a transmission part 145. The transmission part 145 protrudes from the surface of the viewing window panel 14. When the frying basket 10 is mounted in the air fryer main body 20, the transmission part 145 of the viewing window panel 14 is suitable to be in a transmission connection with the protruding part of the microswitch component 30.

As shown in FIG. 7, when the viewing window panel 14 is mounted in the door panel assembly 12, the frying basket 10 is mounted on the air fryer main body 20 and the transmission part 145 of the viewing window panel 14 is in a transmission connection with the microswitch component 30, which ensures that the air fryer can start properly. However, if the viewing window panel 14 is not mounted on the door panel assembly 12, even if the frying basket 10 is mounted on the air fryer main body 20, the air fryer cannot start properly. The air fryer is suitable to be in a transmission connection with the microswitch component 30 through the viewing window panel 14, which ensures that if the viewing window panel 15 is not mounted on the door panel assembly 12, even if the frying basket 10 is mounted on the air fryer main body 20, the air fryer cannot start properly. This effectively enhances the safety of the operation of the air fryer.

### Second Embodiment

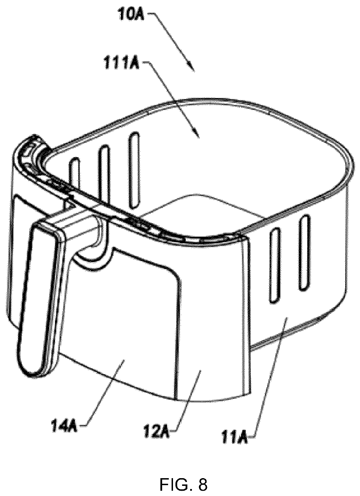

As shown in FIGS. 8 to 11 of the drawings, there are schematic diagrams of one frying basket with a detachable viewing window and an air fryer provided by the present disclosure. The air fryer comprises a frying basket 10A and an air fryer main body 20A. The air fryer main body 20A is provided therein with a cooking chamber 21A; a side part of the air fryer main body 20A is provided with a frying basket opening 22A communicating with the cooking chamber 21A; and the frying basket 10A is suitable to be detachably arranged inside the cooking chamber 21A through the frying basket opening 22A.

The frying basket 10A comprises a frying basket main body 11A and a door panel assembly 12A. The door panel assembly 12A is suitable to be provided on an outer side of the frying basket main body 11A and fixedly connected to the frying basket main body 11A.

As shown in FIGS. 8 to 10, the frying basket main body 11A is provided with an accommodating cavity 111A, wherein the accommodating cavity 111A is suitable to accommodate food. The side part of the frying basket main body 11A is provided with a viewing port 112A, wherein the viewing port 112A communicates with the accommodating cavity 111A. The door panel assembly 12A is suitable to be arranged at the viewing port 112A of the frying basket main body 11A. The door panel assembly 12A is provided with a viewing window 121A corresponding to the viewing port port 112A. This allows users to observe the cooking status of the food inside the accommodating cavity 111A through the viewing port 112A and the viewing window port 121A when cooking food.

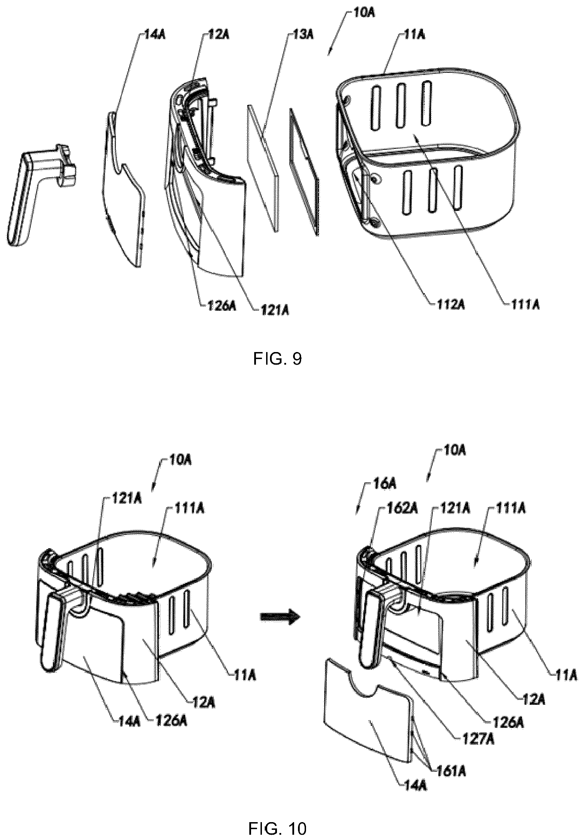

As shown in FIG. 9, the frying basket 10A comprises a transparent board 13A, and the transparent board 13A is arranged between the frying basket main body 11A and the door panel assembly 12A to seal the viewing port 112A. The transparent board 13A is preferably made of heat-resistant transparent materials, such as heat-resistant transparent glass or heat-resistant transparent plastic. The material characteristics of the transparent board 13A ensure that when the transparent board 13A seals the viewing port 112A, it does not affect the visibility of the viewing port 112A.

As shown in FIG. 9, a sealing ring is further arranged between the transparent board 13A and the frying basket main body 11A. The sealing ring is suitable to be compressed and fixed around the periphery of the viewing port 112A of the frying basket main body 11A by the transparent board 13A and is suitable for a sealed connection between the transparent board 13A and the frying basket main body 11A through the sealing ring.

As shown in FIGS. 8 to 11, the frying basket 10A also includes a viewing window panel 14A. The viewing window panel 14A is suitable to be detachably arranged on the door panel assembly 12A to seal the viewing window port 121A. The viewing window panel 14A is detachably arranged on the door panel assembly 12A, which enables the users to first remove the viewing window panel 14A when cleaning the frying basket 10A, and then clean the space of the viewing window panel 14A and/or the space between the viewing window panel 14A and the transparent board 13A. This makes the cleaning of the frying basket 10A easy and convenient. At the same time, the visibility of both the viewing window panel 14A and the transparent board 13A will also be enhanced after cleaning. Users can have a better view through the viewing window port 121A and the viewing port 112A when inspecting the cooking status of the food inside the accommodating cavity 11A, thereby effectively improving the user experience.

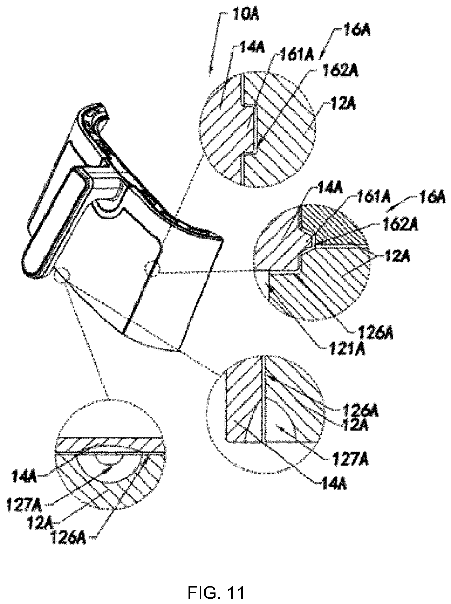

As shown in FIG. 10 and FIG. 11, the viewing window panel 14A and the door panel assembly 12A are provided with multiple snapping structures 16A matching with each other, and the viewing window panel 14A is suitable to directly snap onto the door panel assembly 12A through the snapping structures 16A. The viewing window panel 14A is directly snapped onto the door panel assembly 12A via the snapping structures 16A. This not only simplifies the assembly and disassembly process of the viewing window panel 14A but also effectively reduces the difficulty of mounting and removal of the viewing window panel 14A.

As shown in FIGS. 9 to 11, the door panel assembly 12A is provided thereon with a snap groove 126A corresponding to the viewing window port 121A. The snap groove 126A is recessed into the surface of the door panel assembly 12A, and the viewing window panel 14A is suitable to be detachably arranged within the snap groove 126A through the snapping structure 16A. When the viewing window panel 14A is snapped onto the door panel assembly 12A, the outer surface of the viewing window panel 14A aligns flush with the outer surface of the door panel assembly 12A. The snap groove 126A ensures that the mounting of the viewing window panel 14A onto the door panel assembly 12A does not affect the overall aesthetic appearance of the door panel assembly 12A. At the same time, the smooth and uniform appearance can enhance the visual perception and appeal for users.

As shown in FIG. 11, the snapping structure 16A comprises a fastener 161A and a slot 162A. Preferably, the fastener 161A is symmetrically arranged on both sides of the viewing window panel 14A, and the slot 162A is suitable to be arranged at corresponding positions on both sides of the snap groove 126A. When the viewing window panel 14A is snapped with the door panel assembly 12A, the fastener 161A is snapped with the slot 162A.

As shown in FIGS. 10 and 11, the viewing window panel 14A is preferably made of elastic transparent material, such as elastic transparent plastic. The lower part of the door panel assembly 12A is provided with a groove 127A. The groove 127A communicates with the snap groove 126A, and the groove 127A is preferably located at the corresponding position of the lower end of the viewing window panel 14A. When the viewing window panel 14A is detachably arranged within the snap groove 126A through the snapping structure 16A, users are suitable to apply external force to the viewing window panel 14A through the groove 127A, which enables the separation of the fastener 161A from the slot 162A so as to facilitate the removal of the viewing window panel 14A.

### Third Embodiment

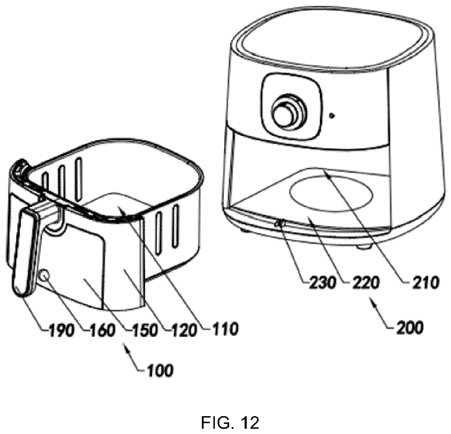

As shown in FIGS. 12 to 17 of the drawings, there are schematic diagrams of one frying basket with a detachable viewing window 100 provided by the present disclosure. The frying basket 100 comprises a frying basket main body 110 and a door mechanism 120. The door mechanism 120 is suitable to be provided on an outer side of the frying basket main body 110 and fixedly connected to the frying basket main body 110.

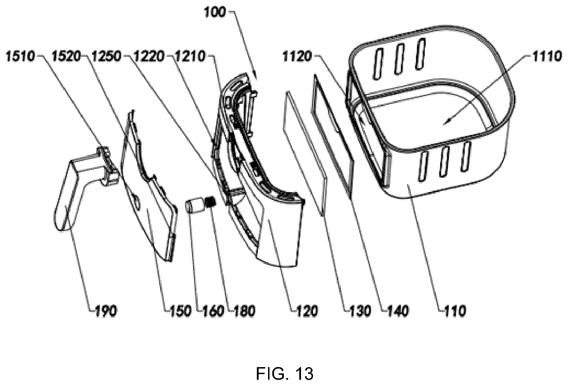

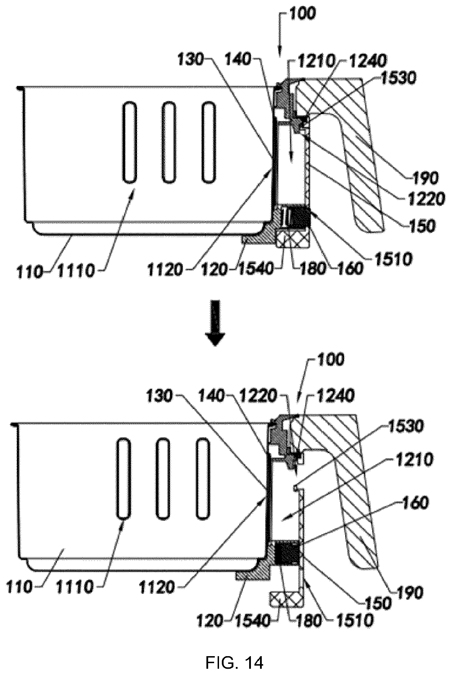

As shown in FIGS. 13 and 14, the frying basket main body 110 is provided with an accommodating cavity 1110, wherein the accommodating cavity 1110 opens upward and the accommodating cavity 1110 is suitable to hold food. A viewing port 1120 is arranged on the side part of the frying basket main body 110, wherein the viewing port 1120 communicates with the accommodating cavity 1110.

As shown in FIGS. 13 and 14, the door mechanism 120 is provided with a viewing window port 1210 corresponding to the viewing port 1120. When connected to the frying basket main body 110, the door mechanism 120 is suitable for observing the contents inside the accommodating cavity 1110 through the viewing port 1120 and the viewing window port 1210.

As shown in FIGS. 13 and 14, the frying basket 100 comprises an inner transparent board 130, wherein the inner transparent board 130 is arranged between the door mechanism 120 and the frying basket main body 110. The inner transparent board 130 is suitable to be firmly pressed and fixed by the door mechanism 120 onto the viewing port 1120 of the frying basket main body 110, thereby sealing the viewing port 1120. The inner transparent board 130 is preferably made of transparent materials, such as transparent glass or heat-resistant transparent plastic plate. The material characteristics of the inner transparent board 130 ensure that when the inner transparent board 130 seals the viewing port 1120, it does not affect the visibility of the viewing port 1120.

As shown in FIG. 13, the periphery of the viewing port 1120 is provided with a sealing part, wherein the sealing part surrounds the periphery of the viewing port 1120 and protrudes from the surface of the side wall of the frying basket main body 110. The inner transparent board 130 is suitable to be pressed and fixed by the door mechanism 120 onto the sealing part of the frying basket main body 110, thereby sealing the viewing port 1120.

As shown in FIGS. 13 and 14, a sealing ring 140 is arranged between the inner transparent board 130 and the frying basket main body 110. The sealing ring 140 is suitable to be pressed and fixed by the inner transparent board 130 onto the sealing part of the frying basket main body 110. When the inner transparent board 130 is connected to the frying basket main body 110, it is suitable to ensure a sealed connection between the inner transparent board 130 and the frying basket main body 110 by the sealing ring 140.

As shown in FIGS. 12 and 14, the frying basket 100 also includes an outer transparent board 150, wherein the outer transparent board 150 can be slidably mounted on the door mechanism 120 to seal the viewing window port 1210. When the outer transparent board 150 is mounted on the door mechanism 120, a first position that fully seals the viewing window port 1210 is provided.

As shown in FIG. 14, the frying basket 100 also includes a button 160, wherein the button 160 is arranged on the door mechanism 120. The button 160 has a pop-up state and a pressed state. The outer transparent board 150 is arranged with a limit hole 1510 matching the button 160. When the outer transparent board 150 is in the first position and the button 160 is in the pop-up state, the button 160 is suitable to snap with the limit hole 1510, such that the outer transparent board 150 is locked in the first position. When the button 160 switches to the pressed state, the button 160 is suitable to separate from the limit hole 1510 so that the outer transparent board 150 is released from its locked position. The frying basket 100 allows the outer transparent board 150 to be slidably arranged on the door mechanism 120 and to be locked by the button 160. Therefore, when cleaning the frying basket 100, users only need to separate the button 160 from the limit hole 1510 to unlock it so that the external transparent board 150 is allowed to be removed to clean the space between the outer transparent board 150 and the inner transparent board 130. This makes the disassembly and cleaning of the outer transparent board 150 relatively simple and convenient, thereby effectively enhancing the user experience.

Further, as shown in FIGS. 13 and 14, the door mechanism 120 is provided thereon with a limit slot 1250 matching the button 160, and the button 160 is suitable to be arranged within the limit slot 1210. The limit slot 1250 is provided with an elastic component 180 matching the button 160, wherein one end of the elastic component 180 is connected to the bottom of the limit slot 1250 and the other end is connected to the button 160. The elastic component 180 has a natural state and a compressed state. When the elastic component 180 is in the natural state, the button 160 is in the pop-up state. When the elastic component 180 is in the compressed state, the button 160 is in the pressed state. The elastic component 180 allows the button 160 to remain in the pop-up state, which in turn allows the button 160 to be continuously locked to the outer transparent board 150, thereby improving structural reliability.

As shown in FIGS. 13 and 14, the door mechanism 120 is provided with a mounting groove 1220 corresponding to the viewing window port 1210; and the outer transparent board 150 are slidably arranged in the mounting groove 1220, and the outer transparent board 150 is suitable to slide along the mounting groove 1220 in a vertical direction. The mounting groove 1220 is suitable for limiting and/or guiding. The mounting groove 1220 is suitable to limit the lateral position of the outer transparent board 150, thus ensuring that the outer transparent board 150 can only slide along the mounting groove 1220. This reduces the difficulty of mounting and removing the outer transparent board 150.

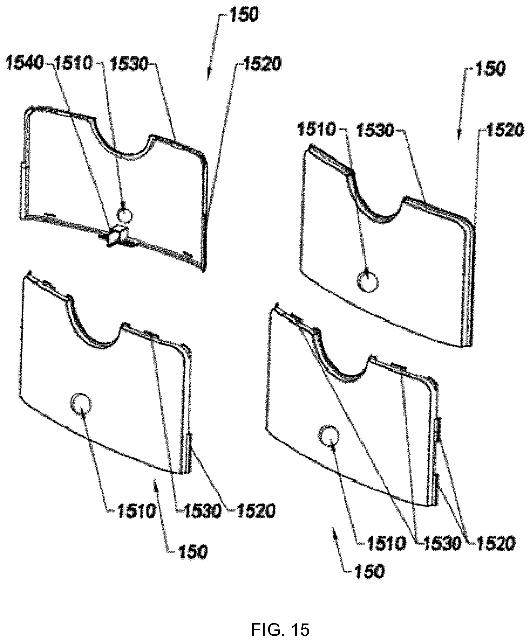

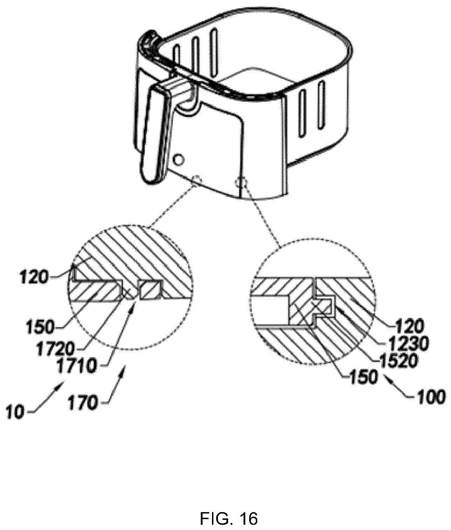

As shown in FIGS. 15 and 16, both sides of the mounting groove 1220 are arranged with sliding slots 1230; both sides of the outer transparent board 150 are provided with slide blocks 1520, wherein the slide blocks 1520 are slidably arranged within the sliding slots 1230; and the outer transparent board 150 is suitable to slide within the mounting groove 1220 via the slide block 1520. The sliding slot 1230 is suitable for the limitation. The sliding slot 1230 is suitable to limit the forward and backward orientation of the outer transparent board 150. Thereby, the outer transparent board 150 is slidably retained in the mounting groove 1220. In addition, it is also possible that by only arranging the slide blocks 1520 on both sides of the lower part of the outer transparent board 150 or arranging the slide blocks 1520 at intervals on both sides of the outer transparent board 150. By only arranging the slide blocks 1520 on both sides of the lower part of the outer transparent board 150, the sliding distance of the outer transparent board 150 is shortened, thus simplifying the assembly and disassembly process. Arranging the slide blocks 1520 at intervals on both sides of the outer transparent board 150 can reduce material consumption and lower production costs.

As shown in FIGS. 13 to 15, an upper side of the mounting groove 1220 is provided with a positioning slot 1240; and the upper part of the outer transparent board 150 is provided with a positioning block 1530. When the outer transparent board 150 is locked in the first position, the positioning block 1530 is suitable to be snapped with the positioning slot 1240. The positioning slot 1240 is suitable for positioning and/or limiting and is suitable for enhancing the stability of the connection between the outer transparent board 150 and the door mechanism 120 by the positioning slot 1240.

As shown in FIGS. 12 and 16, when the outer transparent board 150 is locked in the first position, the outer surfaces of the door mechanism 120, the outer transparent board 150, and the button 160 are flush with each other. This enhances the overall aesthetics of the frying basket 100.

As shown in FIG. 16, the lower part of the outer transparent board 150 and the lower part of the door mechanism 120 are provided with snap-in limit structures 170. When the outer transparent board 150 is locked in the first position, the snap-in limit structures 170 are suitable to limit the outer transparent board 150. Therefore, the difficulty of mounting and removing the outer transparent board 150 is further reduced.

As shown in FIGS. 13 and 14, the snap-in limit structure 170 comprises a snap-in groove 1710 and a limit block 1720, wherein the snap-in groove 1710 and the limit block 1720 are respectively arranged at the lower part of the outer transparent board 150 and the lower part of the door mechanism 120. Additionally, the positions of the snap-in groove 1710 and the limit block 1720 are interchangeable. When the outer transparent board 150 is locked in the first position, the limit block 1720 is suitable to snap with the snap-in groove 1710, thereby limiting the outer transparent board 150.

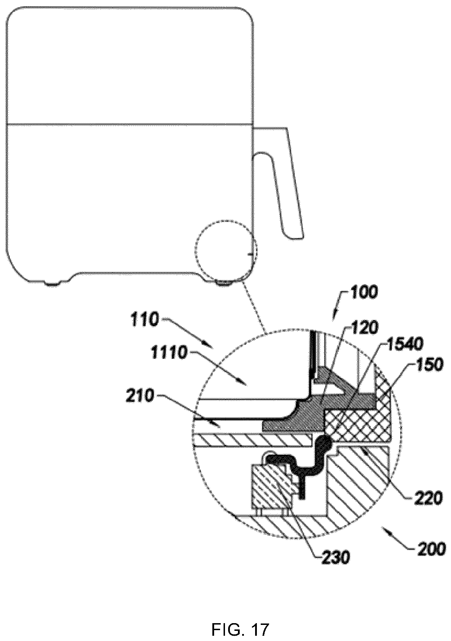

As shown in FIGS. 12 and 17, there are schematic diagrams of one air fryer provided by the present disclosure. The air fryer comprises an air fryer main body 200 and the frying basket 100 mounted on the air fryer main body 200. The air fryer main body 200 is provided therein with a cooking chamber 210; a side part of the air fryer main body 200 is provided with a frying basket mounting port 220 communicating with the cooking chamber 210; and the frying basket 100 is suitable to be detachably arranged inside the cooking chamber 210 through the frying basket mounting port 220.

As shown in FIG. 17, the air fryer also includes a microswitch component 230, wherein the microswitch component 230 is arranged at the frying basket mounting port 220 of the air fryer main body 200 and protrudes at least partially from the inner wall of the frying basket mounting port 220. The microswitch component 230 is suitable to be electrically connected to the control circuit of the air fryer.

As shown in FIGS. 14, 15, and 17, a transmission part 1540 is arranged at the bottom of the outer transparent board 150 facing one side of the door mechanism 120. The transmission part 1540 protrudes from the surface of the outer transparent board 150. When the frying basket 100 is mounted in the cooking chamber 210, the transmission part 1540 of the outer transparent board 150 is suitable to be in a transmission connection with the protruding part of the microswitch component 230.

As shown in FIG. 17, when the outer transparent board 150 is mounted in the door mechanism 120, the frying basket 100 is mounted on the air fryer main body 200, and the transmission part 1540 of the viewing window panel 150 can be in a transmission connection with the microswitch component 230, which ensures that the air fryer can start properly. However, if the outer transparent board 150 is not mounted on the door mechanism 120, even if the frying basket 100 is mounted on the air fryer main body 200, the air fryer cannot start properly. The air fryer is suitable to be in a transmission connection with the microswitch component 230 through the outer transparent board 150 to prevent accidental operation, thereby effectively enhancing the use safety of the air fryer.

As shown in FIGS. 12 to 14, the outer side of the door mechanism 120 is further provided with a handle 190, wherein the handle 190 is suitable to be fixed to the upper part of the door mechanism 120 through screws. The handle 190 is suitable for users to grip and operate the frying basket 100.

### Fourth Embodiment

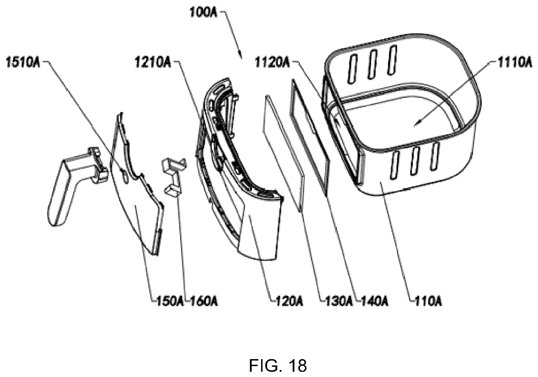

As shown in FIGS. 18 to 19, there are schematic diagrams of another frying basket with a detachable viewing window 100A provided by the present disclosure. The frying basket 100A comprises a frying basket main body 110A and a door mechanism 120A. The door panel assembly 120A is suitable to be provided on an outer side of the frying basket main body 110A and fixedly connected to the frying basket main body 110A.

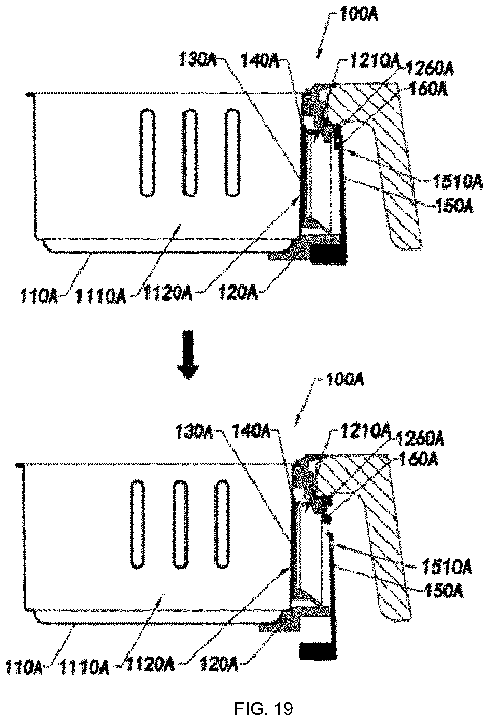

As shown in FIGS. 18 and 19, the frying basket main body 110A is provided with an accommodating cavity 1110A, wherein the accommodating cavity 1110A opens upward and the accommodating cavity 1110A is suitable to hold food. A viewing port 1120A is arranged on the side part of the frying basket main body 110A, wherein the viewing port 1120A communicates with the accommodating cavity 1110A.

As shown in FIGS. 18 and 19, the door mechanism 120A is provided with a viewing window port 1210A corresponding to the viewing port 1120A. When connected to the frying basket main body 110A, the door mechanism 120A is suitable to observe the contents inside the accommodating cavity 1110A through the viewing port 1120A and the viewing window port 1210A.

As shown in FIGS. 18 and 19, the frying basket 100A comprises an inner transparent board 130A, wherein the inner transparent board 130A is arranged between the door mechanism 120A and the frying basket main body 110A. The inner transparent board 130A is suitable to be firmly pressed and fixed by the door mechanism 120A onto the viewing port 1120A of the frying basket main body 110A, thereby sealing the viewing port 1120A. The transparent board 130A is suitable to be made of transparent materials, such as transparent glass or heat-resistant transparent plastic. The material characteristics of the transparent board 130A ensure that when the inner transparent board 130A seals the viewing port 1120A, it does not affect the visibility of the viewing port 1120A.

As shown in FIGS. 18 and 19, the periphery of the viewing port 1120A is provided with a sealing part, wherein the sealing part surrounds the periphery of the viewing port 1120A and protrudes from the surface of the side wall of the frying basket main body 110A. The inner transparent board 130A is suitable to be pressed and fixed by the door mechanism 120A onto the sealing part of the frying basket main body 110A, thereby sealing the viewing port 1120A.

As shown in FIGS. 18 and 19, a sealing ring 140A is arranged between the inner transparent board 130A and the frying basket main body 110A. The sealing ring 140A is suitable to be pressed and fixed by the inner transparent board 130A onto the sealing part of the frying basket main body 110A. When the inner transparent board 130A is connected to the frying basket main body 110A, it is suitable to ensure a sealed connection between the inner transparent board 130A and the frying basket main body 110A by the sealing ring 140A. Therefore, it prevents the heat inside the accommodating cavity 1110A from escaping from the connection between the inner transparent board 130A and the frying basket main body 110A.

As shown in FIGS. 18 and 19, the frying basket 100A also includes an outer transparent board 150A, wherein the outer transparent board 150A can be slidably mounted on the door mechanism 120A to seal the viewing window port 1210A. When the outer transparent board 150A is mounted on the door mechanism 120A, a first position that fully seals the viewing window port 1210A is provided.

As shown in FIGS. 18 and 19, The frying basket 100A in the embodiment is structurally similar to the frying basket 100 described in the above third embodiment, and will not be described in detail here. However, the difference lies in the structure and arrangement of the button 160. In the embodiment, the frying basket 100A includes a button 160A, wherein the button 160A is arranged on the door mechanism 120A. The button 160A has a pop-up state and a pressed state. The outer transparent board 150A is arranged with a limit hole 1510A matching the button 160A. When the outer transparent board 150A is in the first position and the button 160A is in the pop-up state, the button 160A is suitable to snap with the limit hole 1510A, and the outer transparent board 150A is locked in the first position. However, when the button 160A switches to the pressed state, the button 160A is suitable to separate from the limit hole 1510A so that the outer transparent board 150A is released from its locked position. The frying basket 100A allows the outer transparent board 150A to be slidably arranged on the door mechanism 120A and to be locked by the button 160A. Therefore, when cleaning the frying basket 100A, users only need to separate the button 160A from the limit hole 1510A to unlock it so that the external transparent board 150A is allowed to be removed to clean the space between the outer transparent board 150A and the inner transparent board 130A. This makes the disassembly and cleaning of the outer transparent board 150A relatively simple and convenient, thereby effectively enhancing the user experience.

Further, as shown in FIG. 19, the button 160A is made of elastic material, and one end of the button 160A is connected to the door mechanism 120A. The door mechanism 120A is provided thereon with a protective piece 1260A corresponding to the button 160A. The protective piece 1260A is located at the center of the button 160A. When the button 160A is in the pressed state, the button 160A abuts against the protective piece 1260A. In the embodiment, the button 160A is made of elastic material. This allows the button 160A to automatically snap with the limit hole 1510A during the mounting of the outer transparent board 150A, thus enhancing the convenience of use. Additionally, the protective piece 1260A prevents the button 160A from breaking due to excessive pressing, thereby improving structural reliability.

It should be noted that the terminology used herein is intended to describe specific embodiments only and is not intended to limit exemplary embodiments according to the present disclosure. As used herein, the singular form is also intended to encompass the plural form unless the context clearly dictates otherwise, and it should also be understood that when used in this summary, the terms "comprise" and/or "include" indicate the presence of features, steps, operations, devices, components and/or combinations thereof.

The relative arrangement of numeric expressions and numerical values of the components and steps set forth in these embodiments do not limit the scope of the present disclosure unless otherwise specified. At the same time it should be understood that, for ease of description, the dimensions of the respective portions shown in the drawings are not drawn to actual proportions. Techniques, methods, and devices known to those skilled in the art may not be discussed in detail, but where appropriate, such techniques, methods, and devices should be regarded as part of the granted summary. In all examples shown and discussed herein any specific value should be construed as illustrative only and not as a limitation. Therefore, other examples of exemplary embodiments may have different values. It should be noted that: Similar numerals and letters denote similar terms in the following drawings so that once an item is defined in one drawing, it does not need to be further discussed in subsequent drawings.

In the description of the present disclosure, it should be understood that, azimuth or positional relationships indicated by locality terms, such as "front, back, up, down, left, right," "lateral, vertical, perpendicular, horizontal" and "top, bottom", are generally based on the orientation or positional relationships shown in the drawings, only for the convenience of describing the present disclosure and simplifying the description. These locality words do not indicate and imply that the device or element referred to must have a specific orientation or be constructed and operated in a specific orientation without being explained to the contrary, so they cannot be understood as limiting the protection scope of the present disclosure; the locative words "inside and outside" refer to the inside and outside relative to the outline of each component itself.

For ease of description, spatially relative terms such as "over", "above", "on the upper surface of", "on", etc. may be used herein to describe the spatial positional relationship of one device or feature with other devices or features as shown in the drawings. It should be understood that the spatial relative term is intended to encompass different orientations in the use or operation of the device other than those depicted in the drawings. For example, if the devices in the drawings are inverted, devices described as "above" or "above other devices or configurations" will be positioned as "below" or "below other devices or configurations after". Thus, the exemplary term "above" may include both "above" and "below" orientations. The device can also be positioned in different other ways (rotated 90 degrees or in other orientations), and the spatial relative description used here is interpreted accordingly.

In addition, it should be noted that the words "first" and "second" are used to define parts only for the convenience of distinguishing corresponding parts. Unless otherwise stated, the above words have no special meaning, so they cannot be understood as limiting the protection scope of the present disclosure.

The above provides a detailed description of a frying basket with a detachable handle and an air fryer, as provided in the present disclosure. The principle and implementation of the present disclosure are described by using specific examples, and the description of the above embodiments is only used to help understand the method and its core idea of the present disclosure. At the same time, for those skilled in the art, according to the idea of the present disclosure, there will be changes in the detailed description of embodiments and application scope. In conclusion, the contents of the summary should not be understood as limiting the present disclosure.

### Industrial practicality

In the embodiments, by structural design, the viewing window panel is detachably arranged on the door panel assembly, thus enabling users to remove the viewing window panel to clean the space between the viewing window panel and/or between the viewing window panel and the transparent board. This effectively enhances the user experience. Additionally, the door panel assembly is provided with a slide track, and both sides of the slide track are provided with the guide grooves. Both sides of the viewing window panel are provided with the guide blocks matching the guide grooves. When users mount or remove the viewing window panel, only the viewing window panel needs to be slid, which enables the guide blocks to slide along the guide groove within the slide track. Therefore, the removal and mounting of the viewing window panel can be realized, thus reducing the difficulty of mounting and removal of the viewing window panel. At the same time, the viewing window panel and the door panel assembly can be provided with multiple snapping structures matching with each other, and the viewing window panel is directly snapped onto the door panel assembly through the snapping structures. This simplifies the assembly and disassembly process of the viewing window panel and effectively reduces the difficulty of mounting the viewing window panel.

A limit hole is arranged on the outer transparent board, and the button matching the limit hole is arranged on the door mechanism. When the outer transparent board is slidably arranged on the door mechanism, the outer transparent board is locked onto the door mechanism by snapping the button with the limit hole. During the disassembly of the outer transparent board, unlocking is achieved by separating the button from the limit hole. This makes the mounting and removal of the outer transparent board relatively simple and convenient, effectively enhancing the user experience. Additionally, a mounting groove is arranged on the door mechanism, and both sides of the mounting groove are provided with the sliding slots. Using the sliding slots and the mounting groove to guide and/or limit the outer transparent board effectively reduces the difficulty of mounting and removing the outer transparent board. In addition, the frying basket mounting port is arranged with a microswitch component. When the frying basket is mounted on the air fryer main body, the outer transparent board is in transmission connection to the microswitch component to prevent accidental operation, thereby effectively enhancing the use safety of the air fryer.

## Claims

1. A frying basket with a detachable viewing window, **characterized by** comprising a frying basket main body (11,11A), wherein the frying basket main body (11,11A) is provided with an accommodating cavity (111,111A), and a side part of the frying basket main body (11,11A) is provided with a viewing port (112,112A) communicating with the accommodating cavity (111,111A);
a door panel assembly (12,12A), provided on an outer side of the frying basket main body (11,11A) and fixedly connected to the frying basket main body (11,11A), wherein the door panel assembly (12,12A) is provided with a viewing window port (121,121A) corresponding to the viewing port (112,112A);
a transparent board (13,13A), provided between the door panel assembly (12,12A) and the frying basket main body (11,11A) to seal the viewing port (112,112A); and
a viewing window panel (14,14A), detachably arranged on the door panel assembly (12,12A) to seal the viewing window port (121,121A).

2. The frying basket with a detachable viewing window according to claim 1, wherein the door panel assembly (12) is provided with a slide track (122), and both sides of the slide track (122) are provided with guide grooves (123); both sides of the viewing window panel (14) are provided with guide blocks (141) matching the guide grooves (123), and the viewing window panel (14) is suitable to be slidably arranged in the slide track (122) via the guide blocks (141); snap-in structures (15) matched with each other are provided on the viewing window panel (14) and the door panel assembly (12), and the snap-in structures (15) have a locked state and unlocked state, wherein when the viewing window panel (14) is completely positioned within the slide track (122), the snap-in structures (15) are in the locked state and the viewing window panel (14) is locked in the slide track (122) by the snap-in structures (15); and when the snap-in structures (15) are in the unlocked state, the viewing window panel (14) is unlocked,
preferably, the snap-in structures (15) comprise a snap-in groove (152) and a snap-in part (151), wherein the snap-in groove (152) or the locking part (151) is symmetrically arranged on both sides and/or a bottom of the viewing window port (121) of the door panel assembly (12); and the viewing window panel (14) is arranged with the snap-in groove (152) or snap-in part (151) that matches the door panel assembly (12), wherein when the snap-in part (151) is snapped onto the snap-in groove (152), the snap-in structures (15) are in the locked state.

3. The frying basket with a detachable viewing window according to claim 2, wherein the viewing window panel (14) is provided with a handle part (142); the viewing window panel (14) is made of an elastic transparent material; and when the viewing window panel (14) is fully positioned in the slide track (122), an external force is suitable to be applied to the viewing window panel (14) through the handle part (142) so as to switch the snap-in structures (15) from the locked state to the unlocked state,
preferably, the handle part (142) is arranged near the snap-in structures (15).

4. The frying basket with a detachable viewing window according to claim 2, wherein both sides of a lower part of the viewing window panel (14) are provided with the guide blocks (141), wherein the guide blocks (141) are slidably arranged within the guide grooves (123), and the viewing window panel (14) is suitable to slide within the slide track (122) via the guide blocks (141),
preferably, the viewing window panel (14) is suitable to enter the slide track (122) from a bottom side of the slide track (122); a limit slot (124) is provided on an upper side of the slide track (122); and an upper part of the viewing window panel (14) is provided with a limit block (143), and when the viewing window panel (14) fully enters into the slide track (122), the limit block (143) is snapped onto the limit slot (124).

5. The frying basket with a detachable viewing window according to claim 2, wherein the viewing window panel (14) is suitable to enter the slide track (122) from a bottom side of the slide track (122); a limit slot (124) is provided on an upper side of the slide track (122); an upper part of the viewing window panel (14) is provided with a limit block (143), and when the viewing window panel (14) fully enters into the slide track (122), the limit block (143) is snapped onto the limit slot (124).

6. The frying basket with a detachable viewing window according to claim 2, wherein a lower part of the viewing window panel (14) is provided with a positioning slot (144); and a lower part of the door panel assembly (12) is provided with a positioning part (125) corresponding to the positioning slot (144), and when the viewing window panel (14) fully enters the slide track (122), the positioning part (125) is suitable to be snapped onto the positioning slot (144).

7. The frying basket with a detachable viewing window according to claim 1, wherein the viewing window panel (14A) and the door panel assembly (12A) are provided with multiple snapping structures (16A) matching with each other, and the viewing window panel (14A) is suitable to directly snap onto the door panel assembly (12A) through the snapping structures (16A).

8. A frying basket with a detachable viewing window, **characterized by** comprising a frying basket main body (110,110A), wherein the frying basket main body (110,110A) is provided with an accommodating cavity (1110,1110A), and a side part of the frying basket main body (110,110A) is provided with a viewing port (1120,1120A) communicating with the accommodating cavity (1110,1110A);
a door mechanism (120,120A), provided on an outer side of the frying basket main body (110,110A) and fixedly connected to the frying basket main body (110,110A), wherein the door mechanism (120,120A) is provided with a viewing window port (1210,1210A) corresponding to the viewing port (1120,1120A);
an inner transparent board (130,130A), provided between the door mechanism (120,120A) and the frying basket main body (110,110A) to seal the viewing port (1120,1120A);
an outer transparent board (150,150A), slidably arranged on the door mechanism (120,120A), wherein the outer transparent board (150,150A) has a first position where the viewing window port (1210,1210A) is completely sealed, and the outer transparent board (150,150A) is provided with a limit hole (1510,1510A); and
a button (160,160A), arranged on the door mechanism (120,120A), wherein the button (160,160A) has a pop-up state and a pressed state, and the button (160,160A) matches with the limit hole (1510,1510A), wherein
when the outer transparent board (150,150A) is in the first position and the button (160,160A) is in the pop-up state, the button (160,160A) is snapped with the limit hole (1510,1510A), and the outer transparent board (150,150A) is locked in the first position; and when the button (160,160A) switches to the pressed state, the button (160,160A) separates from the limit hole (1510,1510A), and the outer transparent board (150,150A) is released from a locked position.

9. The frying basket with a detachable viewing window according to claim 8, wherein the door mechanism (120) is provided with a mounting groove (1220) corresponding to the viewing window port (1210); the outer transparent board (150) is slidably arranged in the mounting groove (1220), and the outer transparent board (150) is suitable to slide along the mounting groove (1220) in a vertical direction,
preferably, both sides of the mounting groove (1220) are arranged with sliding slots (1230); and both sides of a lower part of the outer transparent board (150) are provided with slide blocks (1520), wherein the slide blocks (1520) are slidably arranged within the sliding slots (1230); and the outer transparent board (150) is suitable to slide within the mounting groove (1230) via the slide blocks (1520); and
preferably, an upper side of the mounting groove (1220) is provided with a positioning slot (1240); an upper part of the outer transparent board (150) is provided with a positioning block (1530); and when the outer transparent board (150) is locked in the first position, the positioning block (1530) is suitable to be snapped with the positioning slot (1240).

10. The frying basket with a detachable viewing window according to claim 8, wherein when the outer transparent board (150,150A) is locked in the first position, outer surfaces of the door mechanism (120,120A), the outer transparent board (150,150A), and the button (160,160A) are flush with each other.

11. The frying basket with a detachable viewing window according to claim 8, wherein a lower part of the outer transparent board (150) and a lower part of the door mechanism (120) are provided with snap-in limit structures (170); and when the outer transparent board (150) is locked in the first position, the snap-in limit structures (170) are suitable to limit the outer transparent board (150).

12. The frying basket with a detachable viewing window according to claim 8, wherein the button (160A) is made of an elastic material, and one end of the button (160A) is connected to the door mechanism (120A); the door mechanism (120A) is provided thereon with a protective piece (1260A) corresponding to the button (160A); and when the button (160A) is in the pressed state, the button (160A) abuts against the protective piece (1260A).

13. The frying basket with a detachable viewing window according to claim 8, wherein the door mechanism (120) is provided with a limit slot (1250) matching the button (160); the limit slot (1250) is provided therein with an elastic component (180) corresponding to the button (160); and when the elastic component (180) is in a natural state, the button (160) is in the pop-up state.

14. An air fryer, **characterized by** comprising an air fryer main body (20,200) and the frying basket (10,10A) with a detachable viewing window according to claim 1 or the frying basket (100,100A) with a detachable viewing window according to claim 8, arranged on the air fryer main body (20,200).

15. The air fryer according to claim 14, wherein the air fryer main body (20,200) is provided with a cooking chamber (21,210); a side part of the air fryer main body (20,200) is provided with a frying basket mounting port (22,220) communicating with the cooking chamber (21,210); the frying basket (10,10A,100,100A) is suitable to be detachably arranged inside the cooking chamber (21,210) through the frying basket mounting port (22,220); and the frying basket mounting port (22,220) is provided with a microswitch component (30,230), wherein the microswitch component (30,230) is suitable to be electrically connected to a control circuit of the air fryer; and when the frying basket (10,10A,100,100A) is mounted in the cooking chamber (21,210), the viewing window panel (14,14A) or the outer transparent board (150,150A) matches with the microswitch component (30,230) in a transmission manner.
